Europäisches Patentamt

European Patent Office

Office européen des brevets

(19)

(11) Veröffentlichungsnummer: **0 043 352**

**A2**

(12) # EUROPÄISCHE PATENTANMELDUNG

(21) Anmeldenummer: 81810264.2

(22) Anmeldetag: 29.06.81

(51) Int. Cl.³: **G 01 C 11/04**

---

(30) Priorität: **27.06.80 CH 4959/80**

(43) Veröffentlichungstag der Anmeldung:
**06.01.82 Patentblatt 82/1**

(84) Benannte Vertragsstaaten:
**DE FR IT**

(71) Anmelder: **WILD HEERBRUGG AG.**

**CH-9435 Heerbrugg(CH)**

(72) Erfinder: **Eichmüller, Karl**
**Industriestrasse 1994**
**CH-9463 Oberriet(CH)**

(74) Vertreter: **Travnicek, Richard**
**c/o Wild Heerbrugg AG**
**CH-9435 Heerbrugg(CH)**

---

(54) **Photogrammetrisches Auswertegerät.**

(57) In einem stereophotogrammetrischen Auswertegerät werden die Schubkräfte der Raumlenker durch geeignet angeordnett elastisch deformierbare Elemente reduziert.

EP 0 043 352 A2

Croydon Printing Company Ltd.

## Stereophotogrammetrisches Auswertegerät

Die Erfindung betrifft ein stereophotogrammetrisches Auswertegerät mit einer Vorrichtung zum Kompensieren von Schubkräften von Raumlenkern, wobei jeder Raumlenker nicht im Schwerpunkt aufgehängt ist und in drei Lagerstellen so gelagert ist, dass jedem Bildpunktpaar zweier Messbilder ein bestimmter Modellpunkt zugeordnet ist. Die stereophotogrammetrischen Auswertegeräte dienen dazu, von photographischen Aufnahmen mehrdimensionaler Objekte Pläne und Karten herzustellen. Die Wirkungsweise von stereophotogrammetrischen Auswertegeräten ist bekannt und in der Literatur beschrieben, z.B. in K.Schwidefsky und F.Ackermann "Photogrammetrie", Teubner Verlag, Stuttgart, 1976.

Die Bedienungsperson fährt die stereoskopischen Messbilder mittels einer Messmarke ab und erzeugt auf diese Weise die entsprechenden Punkte im Modell. Eine bekannte Bauart von stereophotogrammetrischen Auswertegeräten hat als wesentliche Verbindung zwischen den stereoskopischen Messbildern und dem herzustellenden Modell Raumlenker. Die Bedienungsperson kann beliebige Modellpunkte anfahren. Dies geschieht mittels Modellwagen. Die Bedienungsperson kann den Modellwagen entweder im Freihandbetrieb oder durch Handradbetrieb bewegen. Bei der Bewegung des Modellwagens entsteht durch die Schrägstellung der Raumlenker eine Schubkraft auf diesen Modellwagen. Diese Schubkraft ist besonders bei der Freihandauswertung durch die Bedienungsperson störend. Die Bedienungsperson muss bei den Bewegungen bzw. Verschiebungen des Modellwagens einmal gegen die Schubkraft und ein andermal mit der Schubkraft arbeiten, was sich bemerkbar macht durch eine mühsame Auswertung. Das unkontrollierte Vorhandensein solcher Schubkräfte durch die Schrägstellung der Raumlenker macht erforderlich, dass auch der mechanische Antrieb zum Bewegen bzw. Verschieben des Modellwagens zur Aufnahme dieser Kräfte dimensioniert und konstruiert werden muss. Dies bedingt eine Erhöhung der Herstellungskosten.

Die Erfindung hat die Aufgabe, die Bedienungsperson bei der Freihandauswertung zu entlasten und den mechanischen Antrieb, d.h. Handräder einschliesslich Getriebe, oder seien es Servoantriebe, d.h. Servomotoren, zu verkleinern. Dies erfolgt dadurch, dass die Schubkräfte, die während des Betriebs an den Raumlenkern auftreten, weitgehend kompensiert bzw. ausgeglichen werden.

Die Aufgabe wird gelöst durch ein stereophotogrammetrisches Auswertegerät, das dadurch gekennzeichnet ist, dass zwischen dem feststehenden Teil des Auswertegerätes einerseits und jedem Raumlenker andererseits je mindestens ein in Längsrichtung elastisch deformierbares Element angebracht ist, damit die Rückstellkraft des elastischen Elementes die Horizontalkräfte zwischen den Kardanlagern und dem Raumlenker minimal werden.

Das erfindungsgemässe stereophotogrammetrische Auswertegerät zeichnet sich zusätzlich noch durch den Vorteil aus, dass das Gewicht der Raumlenker mindestens teilweise durch die elastisch deformierbaren Elemente direkt auf den feststehenden Teil des Gerätes übertragen wird. Die elastsich deformierbaren Elemente können z.B. Spiralfedern oder auch pneumatische Federelemente sein. Die Führungen und Lager der beweglichen Teile des Gerätes sind damit weniger beansprucht und können bei gleicher Genauigkeit leichter ausgeführt werden.

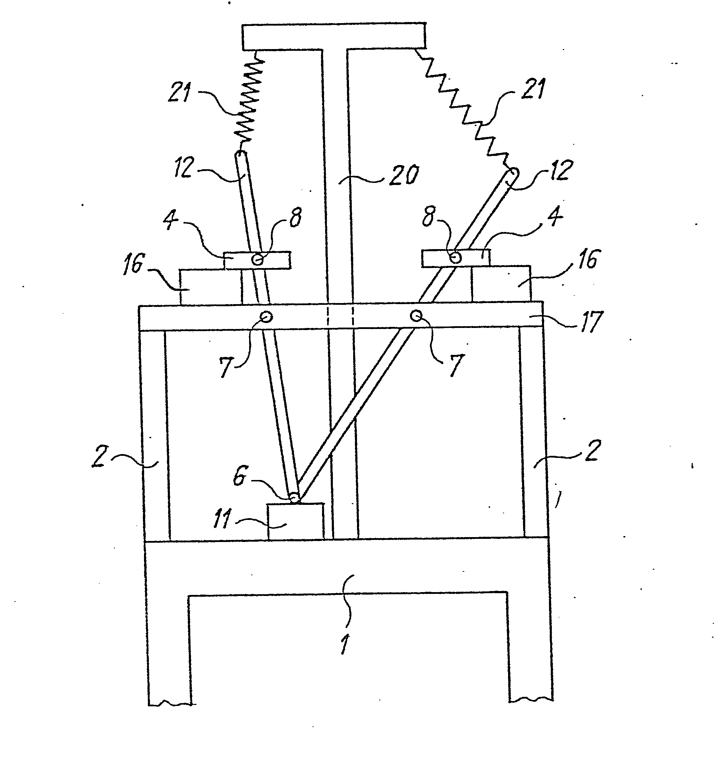

In der Zeichnung ist ein stereophotogrammetrisches Auswertegerät schematisch als Beispiel für die Erfindung dargestellt.

Die Figur zeigt die Vorderansicht eines stereophotogrammetrischen Auswertegerätes. Das Gerät besteht im wesentlichen aus der Grundplatte 1 . Die Grundplatte liegt auf
einem nicht gezeichneten Untergestell. Auf der Grundplatte
ist mit den Säulen 2 der Rahmen 17 befestigt. Auf der
Grundplatte 1 ist der Modellwaren 11 in jeder Richtung
frei beweglich. Am Modellwagen kann der Zeichenstift befestigt sein. Im Modellwagen ist die Lagerstelle 6 für
die beiden Raumlenker 12 vorgesehen. Diese Lagerstelle
6 trägt das Gewicht der beiden Raumlenker 12 . In diesem Beispiel sind beide Raumlenker 12 in einem gemeinsamen Lager 6 gelagert. Jeder Raumlenker 12 ist durch
je ein Kardanlager 7 im Rahmen 17 gelagert. Im Rahmen
17 sind die beiden Bildwagen 16 gelagert und je in einer Ebene verschiebbar. Mittels des Kardangelenkes 8 und
je einem Konstruktionsglied 4 sind je ein Bildwagen 16
und ein Raumlenker 12 miteinander verbunden. Auf der
Grundplatte 1 ist der Träger 20 aufgesetzt. Zwischen
dem Träger 20 und den freien Enden der beiden Raumlenker
12 ist je eine Spiralfeder 21 angebracht. Die Spiralfedern 21 greifen derart am Träger 20 an, dass die
Spiralfedern 21 bei genau vertikal stehenden zugehörigen Raumlenker 12 keine Kräfte in horizontaler Richtung
auf den Raumlenker 12 verursachen. Wenn der Bildwagen
verschoben wird, so wird die Spiralfeder 21 mehr gedehnt

0043352

und ergibt eine zusätzliche Horizontalkraftkomponente auf den Raumlenker ,12 . Diese Horizontalkraft wirkt der durch das Eigengewicht des schief stehenden Raumlenkers 12 verursachten Horizontalkraft entgegen. Für die bei der Auswertung von Stereobildpaaren auftretenden Winkel der Raumlenker 12 ergibt sich damit für jede Stellung des Modellwagens 11 ein genügender Ausgleich der Horizontalkräfte. Am Messwagen 11 treten damit keine störenden horizontalen Kräfte auf. Der Modellwagen wird durch die Spiralfedern 21 gleichzeitig von einem Teil des Gewichtes der beiden Raumlenker 12 entlastet.

23.6.80
Rä
80001/P

WILD HEERBRUGG AG                                    80001/P
CH-9435 Heerbrugg

PATENTANSPRUECHE

1. Stereophotogrammetrisches Auswertegerät mit einer Vorrichtung zum Kompensieren von Schubkräften von Raumlenkern, wobei die Raumlenker nicht im Schwerpunkt aufgehängt und in drei Lagerstellen so gelagert sind, dass jedem Bildpunktpaar zweier Messbilder ein bestimmter Modellpunkt zugeordnet ist, d a d u r c h   g e k e n n z e i c h n e t, dass zwischen dem feststehenden Teil (20) des Auswertegerätes einerseits und jedem Raumlenker (12) andererseits je mindestens ein in Längsrichtung elastisch deformierbares Element (21) angebracht ist, damit durch die Rückstellkräfte des elastischen Elementes (21) die Kräfte zwischen den Kardanlagern (6,7,8) und dem Raumlenker minimal werden.

2. Stereophotogrammetrisches Auswertegerät nach Patentanspruch 1, dadurch gekennzeichnet, dass das elastisch deformierbare Element (21) eine Spiralfeder ist.

3. Stereophotogrammetrisches Auswertegerät nach Patentanspruch 1 oder 2, dadurch gekennzeichnet, dass das elastisch deformierbare Element (21) zwischen dem freien Ende der einseitig in einem Kardanlager gelagerten Raumlenker (12) und einer Gegenhalterung (20) an der Grundplatte (1) eingespannt ist.